# EUROPÄISCHE PATENTSCHRIFT

(11) **EP 3 529 132 B1**
(45) Veröffentlichungstag und Bekanntmachung des Hinweises auf die Patenterteilung: **26.08.2020**
(21) Anmeldenummer: 17781475.3
(22) Anmeldetag: 10.10.2017
(51) Int. Cl.: B62D 25/02, B62D 25/04, B62D 25/08

(54) **VORDERBAU EINES KRAFTFAHRZEUGS**
FRONT STRUCTURE OF A VEHICLE
PARTIE AVANT DE VÉHICULE AUTOMOBILE

(30) Priorität: 21.10.2016 DE 102016220719
(43) Veröffentlichungstag der Anmeldung: 28.08.2019
(73) Patentinhaber: Bayerische Motoren Werke Aktiengesellschaft, 80809 München (DE)
(72) Erfinder: KIESMÜLLER, Ralf, 81549 Muenchen (DE); STEIN, Michael, 85244 Roehrmoos (DE); BOKELOH, Jan, 81925 München (DE); FLOER, Michael, 80992 Muenchen (DE)
(86) Internationale Anmeldenummer: PCT/EP2017/075809
(87) Internationale Veröffentlichungsnummer: WO 2018/073051

(56) Entgegenhaltungen:
- DE-A1- 10 103 252
- DE-A1-102010 051 785
- JP-A- 2006 240 588
- US-A1- 2005 067 858
- US-B1- 6 299 237

## Beschreibung

Die Erfindung betrifft ein Kraftfahrzeug gemäß dem Oberbegriff des Anspruchs 1.

Aus der DE 10 2010 051 785 A1 ist bereits ein Kraftfahrzeug bekannt, bei dem bei einem Vorderwagen im Bereich eines Radhauses auf beiden Seiten jeweils eine dreieckförmige Tragstruktur aus einem seitlichen, in etwa waagrecht verlaufenden Stützträger, einem damit verbundenen, diagonal verlaufenden Stützträger und einem unteren Abschnitt einer A-Säule oder vorderen Karosseriesäule besteht, an der die beiden Stützträger angeordnet sind.

Der waagrecht verlaufende, seitliche Stützträger, der damit verbundene, schräg verlaufende Stützträger sowie zumindest der untere Abschnitt der vorderen Karosseriesäule sind in Blechschalenbauweise aus Profilen hergestellt.

Aufgabe der Erfindung ist es, ein Kraftfahrzeug zu schaffen, bei dem die Anzahl der Profile zur Ausbildung einer jeweiligen dreieckförmigen Tragstruktur zwischen einem Vorderwagen und einer jeweiligen A-Säule verringert ist.

Diese Aufgabe wird durch die Merkmale des Anspruchs 1 gelöst.

Ein erfindungsgemäßes Kraftfahrzeug weist eine Karosserie mit einer Fahrgastzelle auf. Die Karosserie ist mit zwei seitlichen Seitengerippen versehen, die jeweils eine vordere, seitliche Karosseriesäule oder A-Säule aufweisen. An einer Stirnseite der Fahrgastzelle ist ein Vorderbau ausgebildet. Der Vorderbau weist beidseitig jeweils einen Federbeindom, einen waagrecht verlaufenden Stützträger, der zwischen dem Federbeindom und der jeweiligen A-Säule angeordnet ist, und einen zwischen dem Federbeindom und einem unteren Ende der A-Säule verlaufenden Stützträger auf. Die beiden Stützträger und die A-Säule sind jeweils in Schalenbauweise aus Trägerprofilen zusammengesetzt. Durch die genannten drei Träger ist jeweils eine dreieckförmige Tragstruktur gebildet.

Erfindungsgemäß ist das jeweilige nach außen zeigende Trägerprofil der A-Säule, das jeweilige nach außen zeigende Trägerprofil des waagrecht verlaufenden Stützträgers und das jeweilige nach außen zeigende Trägerprofil des diagonal verlaufenden Stützträgers ein einteiliges Profil. Die drei Profile sind zur Bildung der dreieckförmigen Tragstruktur miteinander verbunden sind.

In einer vorteilhaften Ausführungsform schließt sich an die jeweilige vordere, seitliche Karosseriesäule eine Türausschnittsöffnung an. Die jeweilige Türausschnittsöffnung ist durch eine weitere Karosseriesäule begrenzt.

Das jeweilige Seitengerippe weist vorteilhafterweise an seinem oberen Ende einen Dach-Seitenlängsträger auf, der mit dem jeweiligen gegenüberliegenden Dach-Seitenlängsträger über Querträger oder andere Bauteile verbunden ist.

Das in senkrechter Richtung verlaufende Trägerprofil der A-Säule hat in einer vorteilhaften Ausführungsform die Funktion eines Zug-Druckbandes.

Vorteilhafterweise bildet das äußere, einstückige Trägerprofil des waagrecht verlaufenden Stützträgers mit einem oberen Abschnitt der A-Säule einen ersten, oberen Lastpfad, der eine über den jeweiligen Federbeindom eingeleitete Kraft F nach oben, in Richtung des Dach-Seitenlängsträgers des Daches der Fahrgastzelle weiterleitet.

Das äußere, einstückige Trägerprofil des diagonal verlaufenden Stützträgers bildet vorteilhafterweise einen zweiten, unteren Lastpfad, der eine über den jeweiligen Federbeindom eingeleitete Kraft F nach unten in den jeweiligen Seitenschweller weiterleitet.

Das äußere, einstückige Trägerprofil des waagrecht verlaufenden Stützträgers, das äußere, einstückige Trägerprofil des diagonal verlaufenden Stützträgers und/oder das in senkrechter Richtung verlaufende Trägerprofil der A-Säule aus einem vorgefertigten Halbzeug sind bzw. ist aus verschiedenen Werkstoffgüten und Dicken hergestellt.

In einer vorteilhaften Ausführungsform sind bzw. ist das äußere, einstückige Trägerprofil des waagrecht verlaufenden Stützträgers, das äußere, einstückige Trägerprofil des diagonal verlaufenden Stützträgers und/oder das in senkrechter Richtung verlaufende Trägerprofil der A-Säule aus einem Tailor Blank oder aus einem Tailor Rolled Blank hergestellt.

Ausführungsformen der Erfindung werden nachstehend anhand der Zeichnungen beispielshalber beschrieben. Dabei zeigen:
- Figur 1: eine perspektivische Ansicht von der Seite und in Richtung des Fahrzeughecks auf eine teilweise dargestellte Karosserie eines Kraftfahrzeuges, die eine dreieckförmigen Tragstruktur eines Vorderwagens sowie eine teilweise dargestellte Fahrgastzelle zeigt,
- Figur 2: eine perspektivische Ansicht von der Seite entsprechend der Figur 1 jedoch in Richtung des Vorderwagens gerichtet,
- Figur 3: eine Seitenansicht der in den Figuren 1 und 2 gezeigten dreieckförmigen Tragstruktur, die den Verlauf eines ersten Lastpfades in den schräg nach oben in Richtung des Daches verlaufenden linken Abschnitt der vorderen Karosseriesäule und den Verlauf eines zweiten Lastpfades in einen linken Seitenschweller des Fahrzeugbodens zeigt,
- Figur 4: eine Seitenansicht der in den Figuren 1 bis 3 gezeigten, dreieckförmigen Tragstruktur, die in einer senkrechten Ebene aus drei einzelnen Trägerprofilen gebildet ist, und die eine erste Ausführungsform eines unteren Abschnittes der A-Säule zeigt,
- Figur 5: eine Seitenansicht eines Längsschnittes der Fig.3 in einer senkrechten Ebene, wobei der Schnitt parallel zur Längsrichtung des Fahrzeuges und in Fahrzeugquerrichtung versetzt in Richtung der Fahrzeugmitte hin verläuft,
- Figur 6: eine Einzelansicht einer ersten Ausführungsform eines in den Figuren 1 bis 5 gezeigten Trägerprofils der A-Säule, das im unteren Abschnittes der A-Säule ausgebildet ist,
- Figur 7: eine Seitenansicht entsprechend der Figur 4, die eine zweite Ausführungsform eines Trägerprofils der A-Säule zeigt, das im unteren Abschnitt der A-Säule ausgebildet ist,
- Figur 8: eine Einzelansicht der zweiten Ausführungsform des in der Figur 7 gezeigten Trägerprofils der A-Säule,
- Figur 9: eine Seitenansicht entsprechend den Figuren 4 und 7, die eine dritte Ausführungsform eines Trägerprofils der A-Säule zeigt, das im unteren Abschnitt der A-Säule ausgebildet ist, und
- Figur 10: eine Einzelansicht der dritten Ausführungsform des in der Figur 9 gezeigten Trägerprofils der A-Säule.

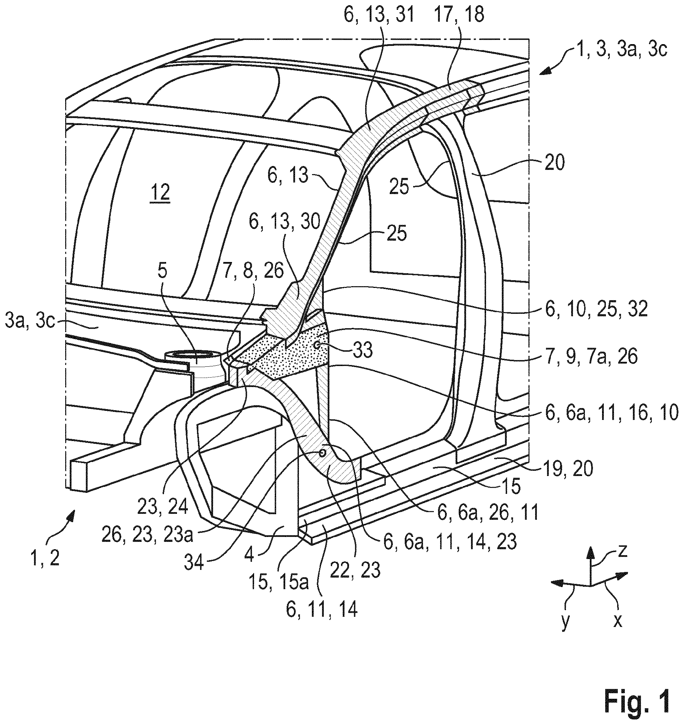

Die Figur 1 zeigt einen teilweise dargestellten Vorderwagen 2 eines Kraftfahrzeuges 1, der an einer Stirnseite 3b einer Karosserie 3a ausgebildet ist. An den Vorderwagen 2 schließt sich eine teilweise dargestellte Fahrgastzelle 3 an, die durch eine Karosserie 3a gebildet ist. Die Karosserie 3a weist zwei seitliche Seitengerippe 3c mit jeweils einer vorderen, seitlichen Karosseriesäule oder A-Säule 6 auf.

In Höhe eines fahrerseitigen Radhauses 4 erstreckt sich am Vorderwagen 2 zwischen einem Federbeindom 5 und einer vorderen Karosseriesäule oder A-Säule 6 ein seitlicher, in etwa waagrecht verlaufender Stützträger 7.

Ein vorderes Ende 8 des Stützträgers 7 ist an dem Federbeindom 5 angeordnet. Ein hinteres Ende 9 des in etwa waagrecht verlaufenden, seitlichen Stützträgers 7 ist in Höhe eines Knickbereiches 10 der vorderen Karosseriesäule 6 angeordnet.

Der Knickbereich 10 der vorderen Karosseriesäule 6 ist zwischen einem oberen Ende 16 des unteren, in etwa senkrecht verlaufenden Abschnittes 11 der vorderen Karosseriesäule 6 und einem unteren Ende 30 eines oberen, parallel zu einer Karosserieöffnung 12 für eine nicht dargestellte Windschutzscheibe verlaufenden, schrägen Abschnittes 13 der vorderen Karosseriesäule 6 ausgebildet. Der obere Abschnitt 13 der vorderen Karosseriesäule 6 geht an seinem oberen Ende 31 in einen Dach-Seitenlängsträger 17 eines Daches 18 über.

Ein unteres Ende 14 des unteren Abschnittes 11 der vorderen Karosseriesäule 6 ist benachbart zu einem unteren Ende 22 eines diagonal verlaufenden Stützträgers 23 befestigt. Das untere Ende 22 des diagonal verlaufenden Stützträgers 23 ist benachbart zu einem vorderen Ende 15a eines Seitenschwellers 15 befestigt. An dem Seitenschweller 15 ist ferner ein unteres Ende 19 einer B-Karosseriesäule 20 angeordnet. Ein oberes Ende 21 der B-Karosseriesäule 20 ist mit dem Dach-Seitenlängsträger 17 verbunden.

Ein oberes Ende 24 des diagonal verlaufenden Stützträgers 23 ist an dem vorderen Ende 8 des waagrecht verlaufenden Stützträgers 7 befestigt. Der Stützträger 23 verläuft diagonal oder schräg zwischen dem vorderen Ende 8 des waagrecht verlaufenden Stützträgers 7 sowie dem unteren Ende 14 des unteren Abschnittes 11 der A-Säule 6.

Der waagrecht verlaufende Stützträger 7, der diagonal verlaufende Stützträger 23 und die A-Säule 6 bestehen in der Regel aus mehreren Profilen, die miteinander verbunden sind und jeweils ein geschlossenes Hohlprofil bilden.

Zur besseren Kraftübertragung und zur Vereinfachung der Herstellung sind die äußeren Trägerprofile 7a, 23a und 6a der jeweiligen geschlossenen Hohlprofile an der jeweiligen Seite der Karosserie 3a einstückig hergestellt. Zur Vereinfachung der Darstellung sind die jeweiligen geschlossenen Hohlprofile nicht dargestellt sondern nur die äußeren Trägerprofile 7a, 23a und 6a.

In einer Ausführungsform sind ein nach außen gerichtetes Trägerprofil 7a des waagrecht verlaufenden Stützträgers 7, ein zu einer Karosserie-Türausschnittsöffnung 25 gerichtetes Trägerprofil 6a und ein nach außen gerichtetes Trägerprofil 23a des diagonal verlaufenden Stützträgers 23 zu einer dreieckförmigen Tragstruktur 26 miteinander verbunden. Das in senkrechter Richtung verlaufende Trägerprofil 6a der A-Säule 6 hat die Funktion eines Zug-Druckbandes.

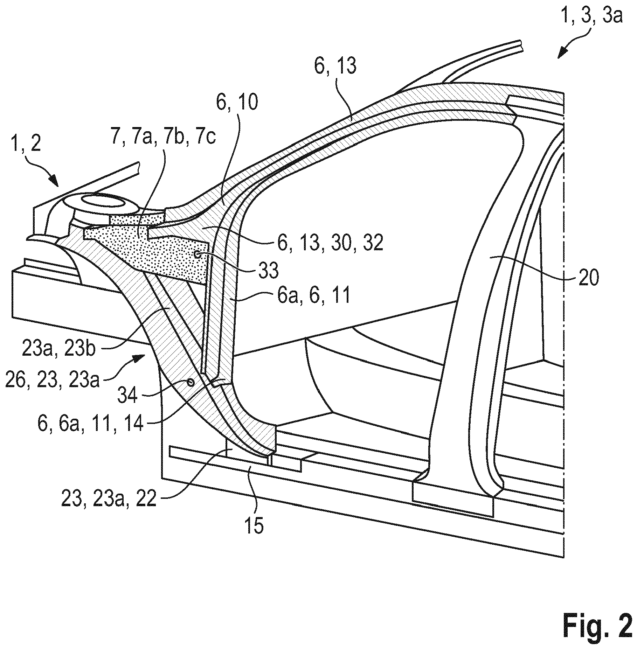

Die Figur 2 zeigt eine perspektivische Ansicht der dreieckförmigen Tragstruktur 26 aus einer Perspektive die in Richtung des Vorderwagens 2 gerichtet ist. Aus der Figur 2 ist erkennbar, dass die Trägerprofile 6a, 7a und 23a jeweils eine dreidimensionale Form haben.

Ferner geht aus der Figur 2 hervor, dass das untere Ende 14 des Trägerprofils 6a des unteren Abschnittes 11 der A-Säule 6 an einem in Fahrzeugquerrichtung y verlaufenden Abschnitt 23b des Trägerprofils 23a des Stützträgers 23 befestigt ist. Ferner ist die Verbindung des unteren Endes 22 des Trägerprofils 23a des Stützträgers 23 mit dem Seitenschweller 15 gezeigt.

In Höhe des Knickbereiches 10 der A-Säule 6 ist ein dreieckförmiger Profilabschnitt 32 am unteren Ende 30 des oberen Abschnittes 13 der A-Säule 6 ausgebildet. Der dreieckförmige Profilabschnitt 32 ist mit einer Außenfläche 7c eines Abschnittes 7b des Trägerprofils 7a des Stützträgers 7 verbunden.

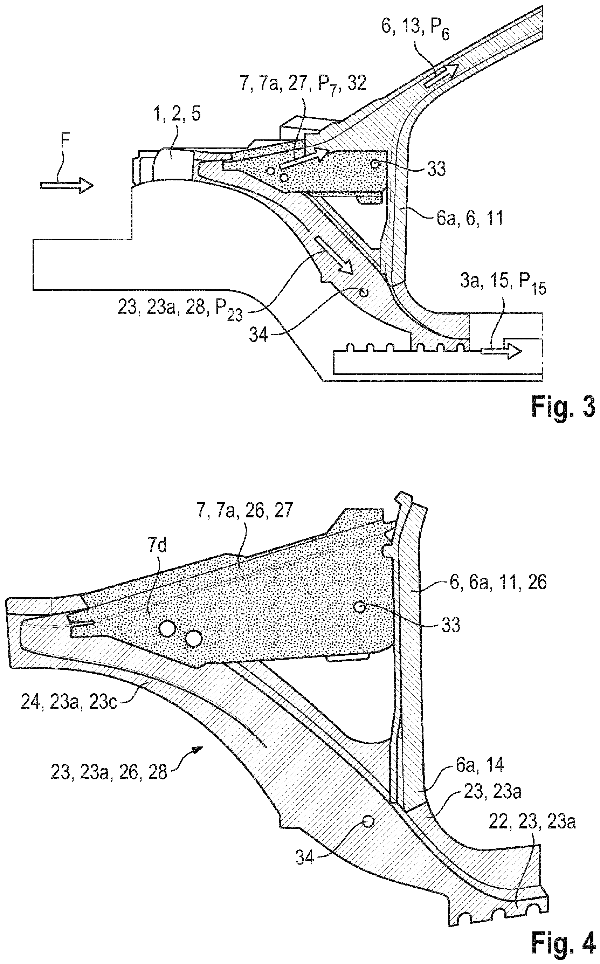

Die Figur 3 zeigt die beiden in der dreieckförmigen Tragstruktur 26 verlaufenden Lastpfade. Das äußere, einstückige Trägerprofil 7a des waagrecht verlaufenden Stützträgers 7 bildet mit einem oberen Abschnitt 13 der A-Säule 6 einen ersten, oberen Lastpfad 27. Der erste, obere Lastpfad 27 leitet eine über den jeweiligen Federbeindom 5 eingeleitete F nach oben, in Richtung des Dach-Seitenlängsträgers 17 des Daches 18 der Fahrgastzelle 3 weiter.

Das äußere, einstückige Trägerprofil 23a des diagonal verlaufenden Stützträgers 23 bildet einen zweiten, unteren Lastpfad 28. Der zweite, untere Lastpfad 28 leitet eine über den jeweiligen Federbeindom 5 eingeleitete F nach unten in den jeweiligen Seitenschweller 15 weiter.

Die Last oder die Kraft F, die beispielsweise bei einem Crash in Fahrzeuglängsrichtung x auf den Vorderwagen 2 auftrifft, wird zum einen über den ersten, oberen Lastpfad 27 in das waagrecht verlaufende Trägerprofil 7a des Stützträgers 7 entsprechend dem Pfeil P₇ eingeleitet und dann entsprechend dem Pfeil P₆ in den oberen Abschnitt 13 der A-Säule 6 weitergeleitet.

Die Last oder die Kraft F, die beispielsweise bei einem Crash in Fahrzeuglängsrichtung x auf den Vorderwagen 2 auftrifft, wird zum anderen über den zweiten Lastpfad 28 in das Trägerprofil 23a des diagonal verlaufenden Stützträgers 23 entsprechend einem Pfeil P₂₃ zum Seitenschweller 15 weitergeleitet. Die im Seitenschweller 15 eingeleitete Kraft oder Last wird entsprechend einem Pfeil P₁₅ in die Karosserie 3a des Kraftfahrzeuges 1 weitergeleitet.

Die Figur 4 zeigt die dreieckförmige Tragstruktur 26 mit einer ersten Ausführungsform des Trägerprofils 6a der A-Säule 6 am unteren Abschnitt 11 der A-Säule. Der in den Figuren 1, 2 und 3 ausgebildete dreieckförmige Überlappungsabschnitt 32 ist an einem unteren Ende 30 des oberen Abschnittes 13 der A-Säule 6 ausgebildet.

Aus der Figur 4 geht ferner hervor, dass ein vorderer Abschnitt 7d des Trägerprofils 7a des Stützträgers 7 einen oberen Bereich 23c des Stützträgers 23 am oberen Ende 24 des Trägerprofils 23a des Stützträgers 23 überlappt und mit dem oberen Ende 24 des Trägerprofils 23a des Stützträgers 23 in zwei Ebenen verbunden ist.

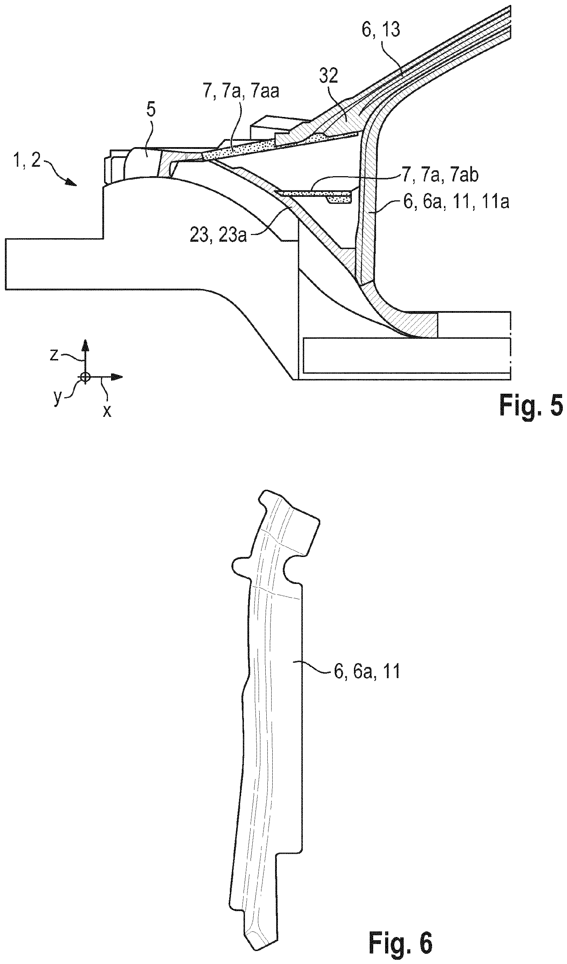

Die Figur 5 zeigt eine Seitenansicht eines Längsschnittes der Figur 3, wobei der Längsschnitt in vertikaler Richtung verläuft. Aus der Figur 5 geht hervor, dass zwei in Fahrzeug-Längsrichtung x sich erstreckende Stege 7aa und 7ab des äußeren, einstückigen Trägerprofils 7a des waagrecht verlaufenden Stützträgers 7 zwischen dem schräg verlaufenden Trägerprofil 23a des Stützträgers 23 und dem dazu gegenüberliegenden Trägerprofil 6a der A-Säule 6 angeordnet sind.

Die Figur 6 zeigt eine Seitenansicht der in den Figuren 1 bis 5 dargestellten ersten Ausführungsform des Trägerprofils 6a am unteren Abschnitt 11 der A-Säule 6.

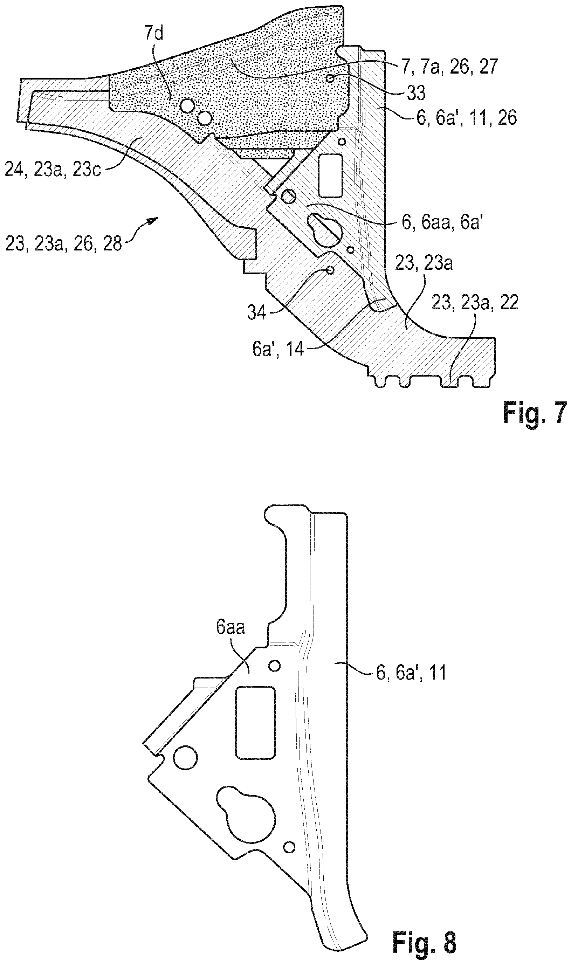

Die Figur 7 zeigt eine dreieckförmige Tragstruktur 26 entsprechend der Figur 4 wobei in der Figur 7 eine zweite Ausführungsform eines Trägerprofils 6a' dargestellt ist, die einen dreieckförmigen Zusatzabschnitt 6aa aufweist.

In der Figur 8 ist eine Seitenansicht der in der Figur 7 gezeigten zweiten Ausführungsform des Trägerprofils 6a" mit einem rechteckförmigen Zusatzabschnitt 6ab dargestellt.

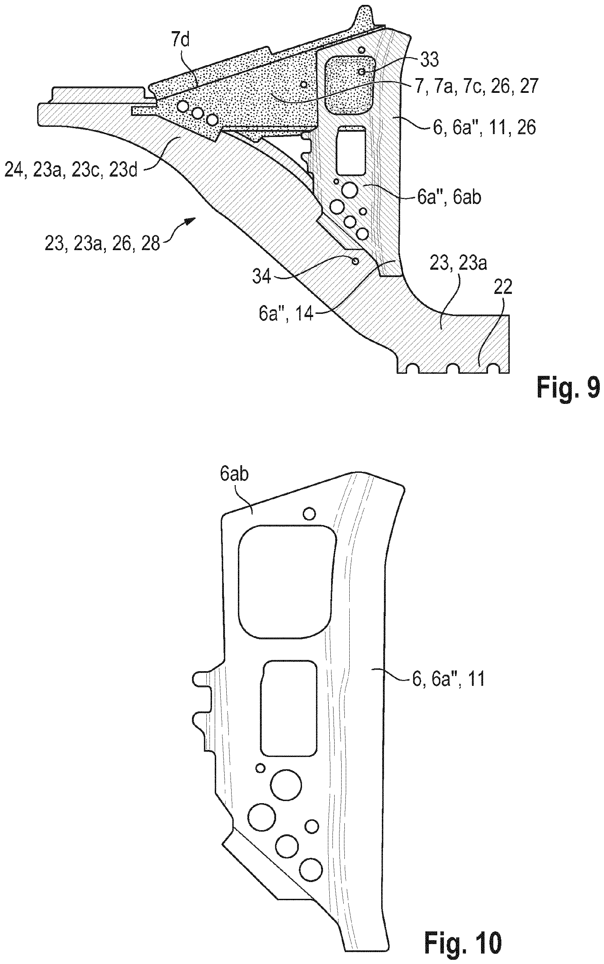

Die Figur 9 zeigt eine Seitenansicht einer dreieckförmigen Tragstruktur 26 entsprechend den Figuren 4 und 7, wobei in der Figur 9 eine dritte Ausführungsform eines Trägerprofils 6a" dargestellt ist.

Wie aus der Figur 9 und der Figur 10 hervorgeht, weist das Trägerprofil 6a" einen rechteckförmigen Zusatzabschnitt 6ab auf, der mit der Außenfläche 7c des Trägerprofils 7a des Stützträgers 7 und mit der Außenfläche 23d des Trägerprofils 23a des Stützträgers 23 verbunden ist.

## Patentansprüche

1. Kraftfahrzeug (1) mit einer Karosserie (3a), die eine Fahrgastzelle (3) bildet, wobei die Karosserie (3a) zwei seitliche Seitengerippe (3c) mit jeweils einer vorderen, seitlichen Karosseriesäule oder A-Säule (6) aufweist, wobei an einer Stirnseite (3b) der Karosserie (3a) ein Vorderbau (2) ausgebildet ist, wobei der Vorderbau (2) beidseitig jeweils einen Federbeindom (5), einen waagrecht verlaufenden Stützträger (7), der zwischen dem Federbeindom (5) und der jeweiligen A-Säule (6) angeordnet ist, und einen zwischen dem Federbeindom (5) und einem unteren Ende (14) der A-Säule (6) verlaufenden Stützträger (23) aufweist, wobei die beiden Stützträger (7, 23) und die A-Säule (6) in Schalenbauweise aus Trägerprofilen zusammengesetzt sind, wobei durch die genannten drei Träger (7, 6, 23) jeweils eine dreieckförmige Tragstruktur (26) gebildet ist, **dadurch gekennzeichnet, dass** das jeweilige nach außen zeigende Trägerprofil (6a) der A-Säule (6), das jeweilige nach außen zeigende Trägerprofil (7a) des waagrecht verlaufenden Stützträgers (7) und das jeweilige nach außen zeigende Trägerprofil (7a) des diagonal verlaufenden Stützträgers (23) ein einteiliges Profil ist und dass die drei Profile zur Bildung der dreieckförmigen Tragstruktur (26) miteinander verbunden sind.

2. Kraftfahrzeug nach Anspruch 1, **dadurch gekennzeichnet, dass** sich an die jeweilige vordere, seitliche Karosseriesäule (6) eine Türausschnittsöffnung (25) anschließt und dass die jeweilige Türausschnittsöffnung (25) durch eine weitere Karosseriesäule (20) begrenzt ist.

3. Kraftfahrzeug nach den Ansprüchen 1 oder 2 **dadurch gekennzeichnet, dass** das jeweilige Seitengerippe (3c) an seinem oberen Ende einen Dach-Seitenlängsträger (27) aufweist, der mit dem gegenüberliegenden Dach-Seitenlängsträger (17) über Querträger oder andere Bauteile verbunden ist.

4. Kraftfahrzeug nach einem der vorhergehenden Ansprüche, **dadurch gekennzeichnet, dass** das in senkrechter Richtung verlaufende Trägerprofil (6a) der A-Säule (6) die Funktion eines Zug-Druckbandes hat.

5. Kraftfahrzeug nach einem der vorhergehenden Ansprüche, **dadurch gekennzeichnet, dass** das äußere, einstückige Trägerprofil (7a) des waagrecht verlaufenden Stützträgers (7) mit einem oberen Abschnitt (13) der A-Säule (6) einen ersten, oberen Lastpfad (27) bildet, der eine über den jeweiligen Federbeindom (5) eingeleitete Kraft F nach oben, in Richtung des Dach-Seitenlängsträgers (17) des Daches (18) der Karosserie (3a) weiterleitet.

6. Kraftfahrzeug nach einem der vorhergehenden Ansprüche, **dadurch gekennzeichnet, dass** das äußere, einstückige Trägerprofil (23a) des diagonal verlaufenden Stützträgers (23) einen zweiten, unteren Lastpfad (28) bildet, der eine über den jeweiligen Federbeindom (5) eingeleitete Kraft F nach unten in den jeweiligen Seitenschweller (15) weiterleitet.

7. Kraftfahrzeug nach einem der vorhergehenden Ansprüche, **dadurch gekennzeichnet, dass** das äußere, einstückige Trägerprofil (7a) des waagrecht verlaufenden Stützträgers (7), das äußere, einstückige Trägerprofil (23a) des diagonal verlaufenden Stützträgers (23) und/oder das in senkrechter Richtung verlaufende Trägerprofil (6a) der A-Säule (6) aus einem vorgefertigten Halbzeug aus verschiedenen Werkstoffgüten und Dicken hergestellt sind/ist.

8. Kraftfahrzeug nach Anspruch 7, **dadurch gekennzeichnet, dass** das äußere, einstückige Trägerprofil (7a) des waagrecht verlaufenden Stützträgers (7), das äußere, einstückige Trägerprofil (23a) des diagonal verlaufenden Stützträgers (23) und/oder das in senkrechter Richtung verlaufende Trägerprofil (6a) der A-Säule (6) aus einem Tailor Blank oder aus einem Tailor Rolled Blank hergestellt sind/ist.

## Claims

1. Motor vehicle (1) having a body (3a) that forms a passenger compartment (3), wherein the body (3a) has two lateral frameworks (3c) that each have a front, lateral body pillar or A-pillar (6), wherein a front-end structure (2) is formed at one end side (3b) of the body (3a), wherein the front-end structure (2) has on each of its two sides a suspension-strut dome (5), a horizontally extending supporting carrier (7) that is arranged between the suspension-strut dome (5) and the respective A-pillar (6), and a supporting carrier (23) extending between the suspension-strut dome (5) and a lower end (14) of the A-pillar (6), wherein the two supporting carriers (7, 23) and the A-pillar (6) are assembled in a monocoque construction from carrier profiles, wherein a triangular support structure (26) is formed in each case by said three carriers (7, 6, 23), **characterized in that** the respective outwardly facing carrier profile (6a) of the A-pillar (6), the respective outwardly facing carrier profile (7a) of the horizontally extending supporting carrier (7), and the respective outwardly facing carrier profile (7a) of the diagonally extending supporting carrier (23) are each a one-piece profile, and **in that** the three profiles are connected together to form the triangular support structure (26).

2. Motor vehicle according to Claim 1, **characterized in that** a door cutout opening (25) adjoins the respective front, lateral body pillar (6), and **in that** the respective door cutout opening (25) is bounded by a further body pillar (20).

3. Motor vehicle according to Claim 1 or 2, **characterized in that** the respective lateral framework (3c) has at its upper end a roof lateral longitudinal member (27), which is connected to the opposite roof lateral longitudinal member (17) via crossmembers or other components.

4. Motor vehicle according to one of the preceding claims, **characterized in that** the vertically extending carrier profile (6a) of the A-pillar (6) has the function of a tension/compression strip.

5. Motor vehicle according to one of the preceding claims, **characterized in that** the outer, one-piece carrier profile (7a) of the horizontally extending supporting carrier (7) forms, with an upper portion (13) of the A-pillar (6), a first, upper load path (27), which conducts a force F, introduced via the respective suspension-strut dome (5), upward in the direction of the roof lateral longitudinal member (17) of the roof (18) of the body (3a).

6. Motor vehicle according to one of the preceding claims, **characterized in that** the outer, one-piece carrier profile (23a) of the diagonally extending supporting carrier (23) forms a second, lower load path (28), which conducts a force F, introduced via the respective suspension-strut dome (5), downward into the respective side sill (15).

7. Motor vehicle according to one of the preceding claims, **characterized in that** the outer, one-piece carrier profile (7a) of the horizontally extending supporting carrier (7), the outer, one-piece carrier profile (23a) of the diagonally extending supporting carrier (23), and/or the vertically extending carrier profile (6a) of the A-pillar (6) is/are produced from a prefabricated semifinished product with different material qualities and thicknesses.

8. Motor vehicle according to Claim 7, **characterized in that** the outer, one-piece carrier profile (7a) of the horizontally extending supporting carrier (7), the outer, one-piece carrier profile (23a) of the diagonally extending supporting carrier (23), and/or the vertically extending carrier profile (6a) of the A-pillar (6) is/are produced from a tailor blank or from a tailor rolled blank.

## Revendications

1. Véhicule automobile (1) comprenant une carrosserie (3a) qui forme un habitacle (3), la carrosserie (3a) comportant deux nervures latérales (3c) pourvues chacune d'une colonne de carrosserie latérale avant ou colonne A (6), une structure avant (2) étant formée sur un côté frontal (3b) de la carrosserie (3a), la structure avant (2) comportant sur chacun des deux côtés un dôme de jambe de suspension (5), une poutre de support horizontale (7), qui est disposée entre le dôme de jambe de suspension (5) et la colonne A respective (6), et une poutre support (23) s'étendant entre le dôme de jambe de suspension (5) et une extrémité inférieure (14) de la colonne A (6), les deux poutres de support (7, 23) et la colonne A (6) étant assemblées pour former une construction de coque comprenant des profilés de poutre, chacune desdites trois poutres (7, 6, 23) formant une structure porteuse triangulaire (26), **caractérisé en ce que** le profilé de poutre respectif (6a), dirigé vers l'extérieur, de la colonne A (6), le profilé de poutre respectif (7a), dirigé vers l'extérieur, de la poutre de support horizontale (7) et le profilé de poutre respectif (7a), dirigé vers l'extérieur, de la poutre de support oblique (23) sont un profilé monobloc et **en ce que** les trois profilés sont reliés les uns aux autres pour former la structure porteuse triangulaire (26).

2. Véhicule automobile selon la revendication 1, **caractérisé en ce qu'**une ouverture de découpe de porte (25) fait suite à la colonne de carrosserie latérale avant respective (6) et **en ce que** l'ouverture de découpe de porte respective (25) est délimitée par une autre colonne de carrosserie (20).

3. Véhicule automobile selon les revendications 1 ou 2, **caractérisé en ce que** la nervure latérale respective (3c) comporte à son extrémité supérieure un longeron de toit latéral (27) qui est relié au longeron de toit latéral opposé (17) par le biais de traverses ou d'autres composants.

4. Véhicule automobile selon l'une des revendications précédentes, **caractérisé en ce que** le profilé de poutre (6a) de la colonne A (6), lequel s'étend dans la direction verticale a la fonction d'une bande de traction-compression.

5. Véhicule automobile selon l'une des revendications précédentes, **caractérisé en ce que** le profilé de poutre extérieur monobloc (7a) de la poutre de support horizontale (7) forme avec une portion supérieure (13) de la colonne A (6) un premier chemin de charge supérieur (27) qui transmet une force F, introduite par le dôme de jambe de suspension respectif (5), vers le haut en direction du longeron de toit latéral (17) du toit (18) de la carrosserie (3a).

6. Véhicule automobile selon l'une des revendications précédentes, **caractérisé en ce que** le profilé de poutre extérieur monobloc (23a) de la poutre de support oblique (23) forme un deuxième chemin de charge inférieur (28) qui transmet une force F, introduite par le biais du dôme de jambe de suspension respectif (5), vers le bas dans le seuil de porte latéral respectif (15) .

7. Véhicule automobile selon l'une des revendications précédentes, **caractérisé en ce que** le profilé de poutre extérieur monobloc (7a) de la poutre de support horizontale (7), le profilé de poutre extérieur monobloc (23a) de la poutre de support oblique (23) et/ou le profilé de poutre vertical (6a) de la colonne A (6) sont fabriqués à partir d'un produit semi-fini préfabriqué de différentes qualités et épaisseurs de matériaux.

8. Véhicule automobile selon la revendication 7, **caractérisé en ce que** le profilé de poutre extérieur monobloc (7a) de la poutre de support horizontale (7), le profilé de poutre extérieur monobloc (23a) de la poutre de support oblique (23) et/ou le profilé de poutre vertical (6a) de la colonne A (6) sont fabriqués à partir d'une ébauche sur mesure ou d'une ébauche laminée sur mesure.
